# EUROPEAN PATENT APPLICATION

(11) **EP 1 160 499 A1**
(43) Date of publication of application: **05.12.2001**
(21) Application number: 00250157.5
(22) Date of filing: 22.05.2000
(51) Int. Cl.: F16M 11/04, G03B 17/56, B25G 3/20

(54) **Camera-to-tripod quick-release mounting**

(71) Applicant: Lemieux, Frank, 14135 Berlin (DE)
(72) Inventor: Lemieux, Frank, 14135 Berlin (DE)

(57) **Abstract**

An improved camera-to-tripod coupling includes a base **x1** (see FIGS. 3 & 4) and a releasable shoe **x2**. The base is attached to the shoe by manually depressing a locking button **x3** against the force of compression spring **x8**, which allows locking ball **x6** to travel downwards in its bore **x6**_{A}. A pushrod **x5** is then free to move inwardly, which allows a locking ball **x4** to retract into its bore **x4**_{A}. Realeasable shoe **x2** can then be placed over flat area **x1**_{B} on base **x1**. A locking ball **x1** then snaps snugly outwardly under the force of a compression spring **x7** against a face of a bore in shoe **x2**. When manual pressure on the fixing/releasing button is released, the fixing releasing button moves outwardly under the force of main compression spring **x8**, which causes locking ball **x6** to rise in its bore until it wedges against pushrod **x5**, effectively blocking the inward travel of the pushrod. Shoe is thus locked to base. Concavities in the interior wall of the recess of the shoe are provided such that the shoe can be releasably attached to the base in any of 24 discrete and equally-spaced rotational orientations, facilitating its general ease of use as well as its adaptation to composite panoramic photography or imagery. A novel anti-twist system is also provided for the releasable shoe whereby shoe may simply be screwed as a unit onto base of camera or other optical device. The shoe is secured against twisting relative to camera by an anti-twist plate rotationally keyed to camera, a pin register plate rotationally keyed to the anti-twist plate, and a manually operated pin retractably emerging from the shoe and entering an appropriate hole in pin register plate to rotationally key said shoe to said pin register plate when shoe is tightened to camera or other optical device.

## Description

### BACKGROUND - FIELD OF THE INVENTION

The present invention pertains to the field of couplings suitable for the rapid fixing and releasing of optical instruments such as still and video cameras, binoculars, telescopes, surveying instruments, and lasers to supporting devices such as tripods, and particularly to the type of coupling having a releasable shoe which is attached to a camera or the like, a base attached to a tripod panhead, and a means on the base to allow for the rapid mounting and release of the shoe/instrument to and from the base/tripod panhead.

### BACKGROUND - DESCRIPTION OF THE PRIOR ART

Optical instruments are commonly provided on their bottom surface with a standardized screw hole by which they may be mounted to a supporting device, such as a tripod. However, as the operation of screwing and unscrewing the camera or other optical instrument to and from the supporting device is awkward and time consuming, the use of a tripod or other supporting device is impractical in the many situations where setup speed is critical.

There are known in the prior art many devices which attempt to address this problem by providing a means for allowing the quick attachment and detachment of the camera to and from the supporting device. All of the devices feature two parts: a shoe or a stud affixed to the screwhole on the bottom of the camera or other optical instrument and intended to largely remain so affixed, and a base integral to, or mountable atop a tripod panhead, which base incorporates a means for quickly fixing and releasing the shoe/stud to, and from the base.

A design encountered in many variations in the prior art features a rectangular shoe, at least two opposing parallel edges of which are formed in an incline outwardly toward the bottom of the shoe, and a fixing/releasing means on the base comprising a clamp in the form of a channel with two inclined walls, one stationary and the other inwardly and outwardly movable. The shoe/camera is aligned with an open end of the channel-shaped base and then slid in to fully engage the inclined walls. The shoe/camera is then secured by manually tightening a knob provided on the base, which moves an inclined wall of the base against its opposing wall, effectively clamping the shoe. The shoe/camera is released by reversing the mounting procedure.

Although this common design is simple and easy to manufacture, it suffers some serious shortcomings in convenience and security. Because the shoe must first be carefully guided and aligned with an open end of the channel, and then fully slid into the base prior to mounting, and that the shoe must be clamped to the base by a screwing operation, greatly reduces any advantage the device may have as a "quick"- mount coupling.

Disclosed in U. S. Patent # 4,929,973 to **Nakatani**, is a panhead with a coupling device, the basic type and operation of which is ubiquitous in the prior art. This type of device features a rectangular receptacle defined in the top of the panhead which is closed on three sides and open along the forth side, and a shoe which is of a generally square or rectangular shape, and having edges inclined outwardly toward the bottom. The shoe, which is attachable to the underside of a camera, fits into the panhead receptacle. A pivotable shoe locking lever is mounted on the open side of the receptacle, and by means of which the shoe may be selectively secured or released, allowing for the quick attachment or release of the camera to or from the panhead. However, in this coupling and in many others of similar design, the camera/shoe can be rotationally oriented to its receptacle prior to attachment, in at most two distinct positions. The care thus required to correctly position the camera/shoe over its receptacle prior to attachment slows the process of affixing the camera to the supporting device. In addition, the pivoting shoe locking lever of this prior-art coupling and many of its type must, after the placement of the shoe into the tray, be manually pushed further in the locking direction in order to ensure a secure connection. In this, and in the previously discussed prior-art coupling, the shoe features outwardly inclined edges which are exposed and thus vulnerable to damage when not mounted in the base tray or receptacle. The outwardly inclined edges of the shoes of devices of this type also present a protrusion which can easily snag on clothing, straps, equipment bags, and the like.

Disclosed in U.S. Patent # 4,795,118 to **Kosugi**, is a panhead which incorporates a coupling device, the shoe of which comprises inwardly-formed working surfaces which are thus not vulnerable to damage and snagging. However, this design suffers many serious shortcomings. After the shoe is attached to the base, a separate and distinct manual operation is required to firmly lock it. Also, this device is of such size and complexity as to be only suitable for being integral to a panhead. Furthermore, the utility and convenience of the quick-release component of this device is seriously compromised by the fact that the shoe can be attached to, and released from the base in but a single distinct and narrowly-ranged rotational position.

Disclosed in U.S. Patent # 5,333,023 to **Oxford**, is a device comprising, instead of a shoe, a grooved stud attachable to the underside of a camera. A base attachable to the supporting device is provided which includes a cylindrical receptacle for the grooved stud, and a pivoting lever to engage with the groove to releasably attach the camera to the supporting device in a number of rotational orientations.

Although this device addresses the need to attach a camera to a supporting device in a number of rotational orientations, it nevertheless suffers serious shortcomings inherent in its design. The grooved stud, which is intended to largely remain on the camera, presents a protrusion extremely likely to snag on camera bags, straps, and clothing. In addition, a camera with such a stud affixed to it would be unable to be stably placed on a table on its bottom surface - it would have to be placed on its back, which is generally undesirable because of the resulting vulnerability of its optical elements to damage, or exposure to direct sunlight. Furthermore, the fixing/releasing means of this device, with its pivoting lever secured to the "locked" position with merely a spring ball detent, is highly susceptible to inadvertent release. The large pivoting lever of this device is also likely to snag on bags, clothing, etc.

Disclosed in U.S.Patent # 2,823,003 to **Puggard**, is a coupling with a disc-shaped shoe and base. Although this device also addresses the need to attach a camera to its supporting device in a variety of rotational orientations, it too suffers serious drawbacks. The exposed circumferential beveled groove on its shoe is not only susceptible to damage; it can also easily snag on clothing and the like. A more significant drawback is that the screwing operation required to securely attach (and remove) the shoe to its base significantly reduces the device's utility as a "quick" mount coupling. And of course, the fastening knob extending from the base also presents a protrusion likely to snag on clothing and equipment bags.

The previously described prior art quick couplings have shortcomings inherent in their respective designs, as well as some shortcomings they share. The devices of **Nakatani** and **Kosugi**, as well as any of the frequently encountered quick release devices which allow the joining of the shoe to the base in few orientations only, feature shoes which are attached to the camera with a separate screw, which hinders the quick removal of the shoe from the camera should the need arise. A separate camera screw must be used, because if in the interest of ease of attachment and removal, the shoe and the camera screw were formed as a unit, the rotational orientation of the shoe with respect to the camera would, upon tightening, be entirely arbitrary. However, since the shoes of the previously described quick-releases can mate with their respective bases only in few distinct positions, an arbitrary shoe-to-camera orientation would be confusing and unacceptable, especially if one were to use two or more shoe/camera combinations on the same base/tripod panhead - a situation common in photography. In addition, the limitation of possible mounting positions slows the shoe-to-base coupling operation by forcing the photographer to visually confirm alignment while guiding the camera/shoe to its receptacle. This is a critical drawback to a photographer intent on keeping an eye on the subject while setting up equipment.

Among the devices cited which allow for a relative multitude of rotational orientations in which a camera may be attached to its supporting device, all of them feature protruding, exposed working surfaces which are easily damaged or fouled, as well as potential problem areas for snagging.

Many "heavy duty" versions of coupling devices of the prior art also feature an anti-twist system designed to prevent the inadvertent twisting loose of the shoe from the base of the optical device. All the anti-twist systems of the prior art comprise a plate with an upturned edge adapted to abut against a bottom edge of the camera or optical device, and a groove formed in the upper surface of the shoe adapted to slidably engage the plate. Because this groove/plate assembly cannot be rotated with respect to the optical device, a separate screw must be employed in this device, which slows the removal of the shoe from the camera should the need arise. An anti-twist system is needed combining the convenience and speed of operation of a one-piece camera screw/shoe, and the security of an anti-twist plate.

### OBJECTS AND ADVANTAGES

Accordingly, several objects and advantages of the present invention are:
**to provide a camera-to-tripod coupling**
- the components of which may be joined to each other in a multitude of possible rotational orientations;
- the shoe of which features inwardly-formed engaging surfaces, which are thus unsusceptible to damage and fouling as well as unlikely to snag clothing, equipment bags, and the like;
- the components of which may be quickly and easily removed from the optical device (or the like) without the use of tools, or a separate camera screw;
- the components of which are of such simplicity and compactness as to be readily adaptable for mounting atop virtually any optical device and panhead;
- which includes a fixed position which is mechanically locked against accidental release, and which locking is accomplished automatically and without additional manual operations;
- the operation of which is sufficiently obvious and intuitive that it can be reliably operated by feel alone, and without the need of visual confirmation of shoe-to-base orientation prior to attaching.
- featuring a shoe anti-twist system not requiring a separate camera attachment screw.

A further and significant object and advantage of the present invention is to provide a camera-tripod coupling which allows for a multitude of distinct locking rotational orientations between the camera/shoe and the base/panhead, each of which orientations is so spaced as to enable, by the consecutive engagement of orientations or combination of orientations, composite panoramic photography or imagery, or other applications requiring similar rotational indexing of an optical device about its supporting device. Still further objects and advantages of the present invention will become apparent from a consideration of the drawings and the ensuing description

### BRIEF DESCRIPTION OF THE DRAWINGS

- FIG. 1: is a perspective view of a preferred embodiment "X" of a coupling device according to the present invention.
- FIG. 2: is an exploded perspective view of the device shown in FIG. 1
- FIG. 3: is a partial longitudinal sectional view of the device shown in FIG. 1, illustrating the locked position.
- FIG. 4: is a partial longitudinal view of the device shown in FIG. 1, illustrating the released position.
- FIG. 5: a plan view illustrating the angular relation of the concavity-to-protrusion radial engagement points of the base and shoe of the device shown in FIG. 1
- FIG. 6: is a perspective view of a preferred embodiment "Y" of a coupling device according to the present invention.
- FIG. 7: is an exploded perspective view of the device shown in FIG. 6.
- FIG. 8: is a longitudinal sectional view of the device shown in FIG. 6, illustrating the locked position.
- FIG. 9: is a longitudinal view, partially in section, of the device shown in FIG. 6, illustrating the released position.
- FIG. 10: is a plan view illustrating the angular relation of the concavity-to-protrusion radial engagement points of the base and shoe of the device shown in FIG. 6.
- FIG. 11: is a plan view of the layout of the base retaining means of an alternative embodiment of a device according to the present invention. The retaining means comprises one stationary and one movable screw (or pin or protrusion, etc.), arranged 180 degrees apart. The manner of operation of this embodiment is similar to that of the preferred embodiment "Y".
- FIG. 12: shows perspective and sectional views of two alternative embodiments of a device according to the present invention, with respect to the arrangement of the inclined engaging surfaces of their retaining means.
- FIG. 13: shows the "equally-spaced radial serrations" on the shoe and the base of an alternative embodiment of a device according to the present invention.
- FIG. 14: is a perspective view of a device according to the present invention incorporating well-known anti-twist features in the shoe and base, and its relation to a camera and a panhead.
- FIG. 15: shows a novel anti-twist system featuring a shoe with integrated camera screw. The system can be applied to all of the disclosed embodiments of the device according to the present invention, as well as to many devices of the prior art.
- FIG. 16: the device according to the present invention, used as a camera strap rapid attachment means. It is shown here attaching to the tripod collar of a large telephoto lens. Of course, shoes may be left permanently attached to every piece of camera equipment having a tripod screwhole, thus allowing one strap to be used to carry only the equipment currently in use, eliminating the tangle of camera straps encountered when several camera bodies are stored in a camera bag.

| **REFERENCE NUMERALS - EMBODIMENT X** ( numerals without "X" prefix not specific to embodiment X ) | | | |
|---|---|---|---|
| _{**X**}**1.** | base | _{**X**}**3**_{**A**}**.** | ball ramp |
| **1**_{**A**}**.** | threaded socket (for panhead) | _{**X**}**4.** | retaining ball |
| _{**X**}**1**_{**B**}**.** | flat area (base) | _{**X**}**5.** | pushrod |
| _{**X**}**1**_{**C**}**.** | circular boss (base) | _{**X**}**5**_{**A**}**.** | stepped bore |
| _{**X**}**1**_{**D**}**.** | slot | _{**X**}**6.** | locking ball |
| **1**_{**E**}**.** | knurl | _{**X**}**6**_{**A**}**.** | bore (for locking ball) |
| _{**X**}**2.** | shoe | _{**X**}**7.** | compression spring (for pushrod) |
| _{**X**}**2**_{**A**}**.** | concavity | _{**X**}**8.** | main compression spring |
| **2**_{**A**}**.** | screwthread (for camera) | **9.** | spirit level |
| **2**_{**B**}**.** | resilient friction material | _{**X**}**10.** | assembly screws |
| _{**X**}**3.** | fixing/releasing button | | |

| **REFERENCE NUMERALS - EMBODIMENT Y, et al.** ( numerals without "Y" prefix not specific to embodiment Y ) | | | |
|---|---|---|---|
| _{**Y**}**1.** | base | _{**Y**}**8.** | main compression spring |
| **1**_{**A**}**.** | threaded socket (for panhead) | **9.** | spirit level |
| _{**Y**}**1**_{**B**}**.** | flat area (base) | **10.** | inclined retaining means (base) |
| _{**Y**}**1**_{**C**}**.** | circular boss (base) | **10**_{**A**}**.** | L-sectioned interior wall (shoe) |
| _{**Y**}**1**_{**D**}**.** | slot | **11.** | L-sectioned retaining means (base) |
| **1**_{**E**}**.** | knurl (base) | **11**_{**A**}**.** | inwardly inclined interior wall (shoe) |
| _{**Y**}**2.** | shoe | **12.** | equally-spaced radial serrations (base) |
| _{**Y**}**2**_{**A**}**.** | concavity | **12**_{**A**}**.** | equally-spaced radial serrations (shoe) |
| **2**_{**A**}**.** | screwthread (for camera) | **13.** | grooved coupling shoe |
| **2**_{**B**}**.** | resilient friction material | **13**_{**A**}**.** | camera screw (shoe) |
| _{**Y**}**3.** | fixing/releasing button | **13**_{**B**}**.** | anti-twist plate (conventional) |
| _{**Y**}**3**_{**A**}**.** | stepped bore | **14.** | setscrews |
| _{**Y**}**4.** | retaining screw (movable) | **14**_{**A**}**.** | threaded setscrew holes |
| _{**Y**}**4**_{**A**}**.** | retaining screws (stationary) | | |
| _{**Y**}**5.** | locking button | NUMERALS 20-22: NOT PART OF INVENTION | |
| _{**Y**}**5**_{**A**}**.** | blind bore (for locking button) | **20.** | camera |
| _{**Y**}**5**_{**B**}**.** | groove | **20**_{**A**}**.** | camera screwhole |
| _{**Y**}**5**_{**C**}**.** | shoulder | **21.** | panhead base |
| _{**Y**}**6.** | locking ball | **21**_{**A**}**.** | camera screw (panhead) |
| _{**Y**}**6**_{**A**}**.** | bore (for locking ball) | **22.** | panhead |
| _{**Y**}**7.** | compression spring (locking button) | | |
| **30.** | anti-twist shoe | **32**_{**A**}**.** | pin register bores |
| **30**_{**A**}**.** | locking pin | **33.** | anti-twist plate |
| **30**_{**B**}**.** | locking pin bore | **33**_{**A**}**.** | anti-twist plate groove |
| **30**_{**C**}**.** | locking pin detent spring | **33**_{**B**}**.** | resilient material |
| **30**_{**D**}**.** | detent spring groove | **34.** | spring retaining clip |
| **31.** | low-friction washer | **40.** | swiveling camera strap attachment screw |
| **32.** | pin register plate | | |

### DETAILED DESCRIPTION OF PREFERRED EMBODIMENT X

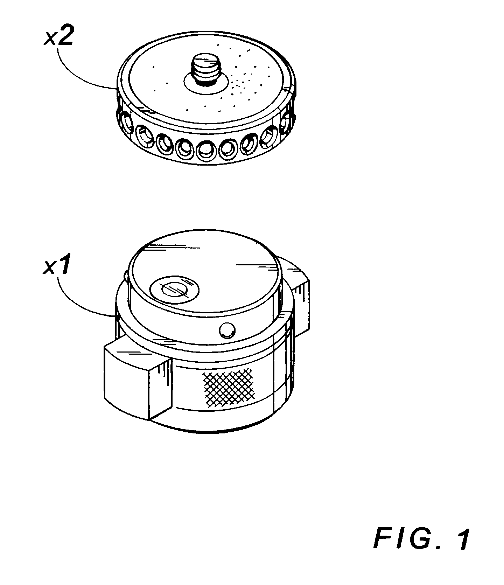

Referring now to FIGS. 1-4, 14 and 15, embodiment "X" of the device according to the present invention will be described:

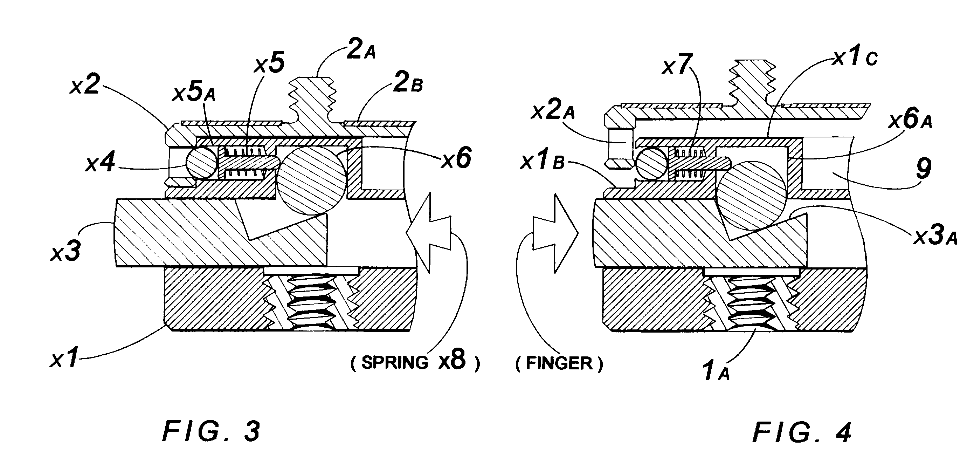

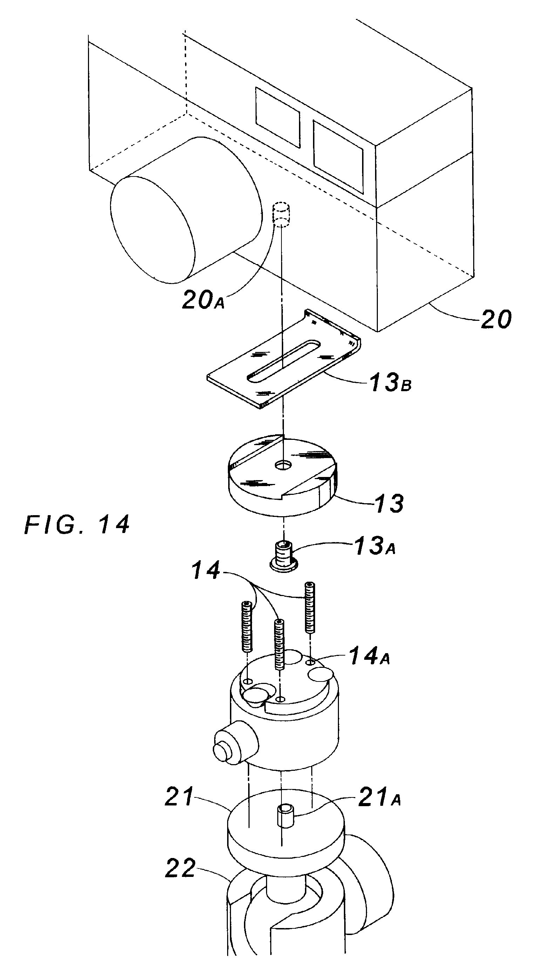

The device includes a base _{**X**}**1** (see FIG. 1) at the lower end portion thereof. Base _{**X**}**1** is mounted to the panhead base **21** (see FIG. 14) of a conventional tripod panhead **22**. A threaded socket **1**_{A} (see FIG. 3) is formed in the central bottom portion of base _{**X**}**1**, which is adapted to mate with a standard camera mounting screw **2l**_{**A**} (see FIG. 14), which protrudes from the panhead base **21** of a conventional tripod panhead **22**. At the upper end portion of the present invention, a shoe _{**X**}**2** (see FIG. 1) is provided which includes on its upper middle portion, a protruding screw thread **2**_{**A**} (see FIG. 3) which is adapted to mate with the standard tripod screwhole **20**_{**A**} (see FIG. 14) found in the underside of most cameras and optical equipment.

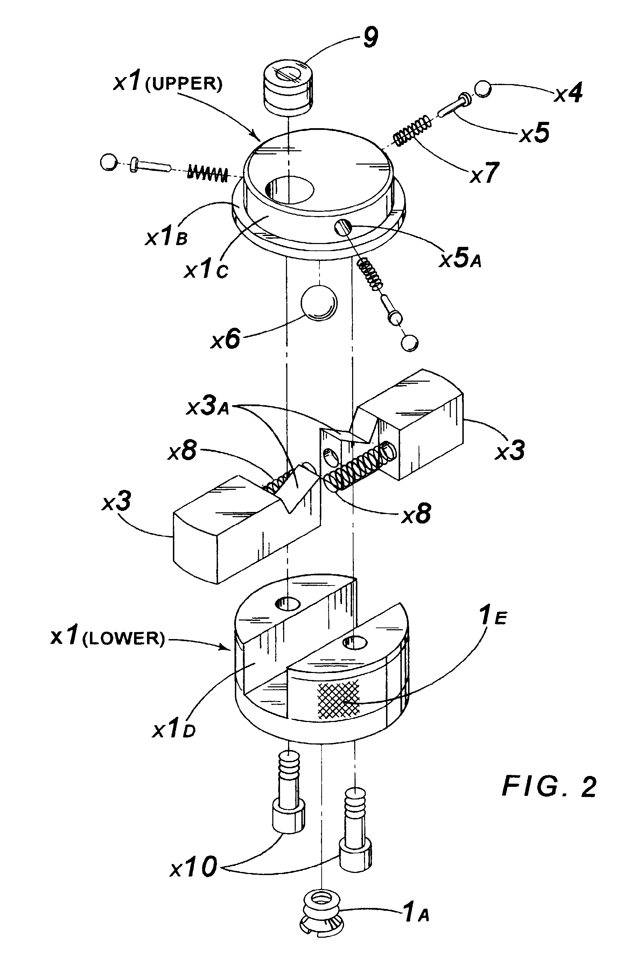

Base _{**X**}**1** (see FIG. 2) comprises a two-piece cylindrical body, the upper portion of which is formed of hardened metal, and on which is formed a flat area _{**X**}**1**_{**B**} and a circular boss _{**X**}**1**_{**C**}. A bore is formed near the edge of the circular boss to accept a spirit level **9**. A blind bore _{**X**}**6**_{**A**} (see FIG. 3) is formed in the center of the underside of the upper piece to slidably accept a locking ball _{**X**}**6**. Three radially equally-spaced stepped bores _{**X**}**5**_{**A**} (see FIG. 3) are formed in the vertical periphery of the circular boss _{**X**}**1**_{**C**}, and entering the vertical walls of the blind bore _{**X**}**6**_{**A**}. Compression springs _{**X**}**7** are slidably mounted in the larger diameter of the stepped bore _{**X**}**5**_{**A**}. Three hardened-metal plungers _{**X**}**5** are slidably mounted in the smaller diameter of the stepped bores _{**X**}**5**_{**A**}. Retaining balls _{**X**}**4** are slidably mounted in the stepped bores, and the outer edge of the bore is dimpled to retain the spring/plunger/retaining ball assembly. Two blind, threaded holes (not shown) are formed in the underside of the upper portion of base _{**X**}**1** to accept threaded portion of assembly screws _{**X**}**10**. The lower portion of the base _{**X**}**1** is formed of a light alloy, and has a slot _{**X**}**1**_{**D**} formed through the middle of its upper surface. A knurl **1**_{**E**} is formed around the outer periphery, and a thread is formed in the middle of the underside to accept a threaded socket **1**_{**A**}. Two stepped throughbores are formed to accept the shank/head portion of the assembly screws _{**X**}**10**.

Two square-sectioned fixing/releasing buttons _{**X**}**3** (see FIG. 2) oppose each other, and are formed of hardened metal, and have two cutouts formed on their inner ends. One cutout is angled to form a ballramp _{**X**}**3**_{**A**} on its upper surface, the other cutout forms a void adapted to clear a vertical section of its opposing fixing/releasing button when both buttons are retracted into the base in the released position. Two blind bores are formed in the inner ends of the fixing/releasing buttons to accept two main compression springs _{**X**}**8**. The two square-sectioned buttons are slidably mounted in slot _{**X**}**1**_{**D**}, and held in place by ball _{**X**}**6** (see FIG. 3) when base is assembled with the assembly screws _{**X**}**10**.

Shoe _{**X**}**2** (see FIG. 1) is disc-shaped and constructed of a single piece of hardened metal. A circular recess is formed in the bottom surface of the shoe. Twenty-four equally-spaced holes _{**Y**}**2**_{**A**} (see FIG. 4) are formed in the vertical wall of the recess, which form internal concavities, the size and shape of which match the protruding retaining balls _{**X**}**4** of the base _{**X**}**1**. A resilient friction material _{**X**}**2**_{**B**} (see FIG. 4) is bonded to the upper surface of the shoe, which serves to protect the finish of the camera or other device to which it is mounted, and to prevent inadvertent slippage.

### OPERATION OF THE INVENTION - EMBODIMENT X

Referring to FIGs. 1-4, the operation of embodiment "X" of the coupling device constructed in this manner will now be described.

The coupling operation is as follows: the fixing/releasing buttons _{**X**}**3** are fully depressed and held in the released position (see FIG. 4). As the fixing/releasing buttons _{**X**}**3** are depressed, the locking ball _{**X**}**6** moves downwardly in its bore. A camera (not shown) with shoe _{**X**}**2** attached is then lowered over the circular boss _{**x**}**1**_{**c**} of the base until the bottom of the shoe encounters the retaining balls _{**X**}**4**. The camera/shoe is then gently pushed downward to overcome the outward force of the compression springs _{**X**}**7**, until the bottom of the shoe is resting on the flat area _{**X**}**1**_{**B**} of the base. The shoe/camera is then rotated slightly (no more than 7.5 degrees) in either direction until the retaining balls _{**X**}**4** snap snugly into matching concavities of the shoe. The fixing/ releasing buttons are then released (see FIG. 3). The fixing /releasing buttons then move radially outward by the force of the two compression springs _{**X**}**8**. As the fixing/releasing buttons move outward, the locking ball _{**X**}**6** is forced upward in its bore by the ballramp _{**X**}**3**_{**A**} until it rests against the inner end of pushrod _{**X**}**5**, effectively blocking the rearward travel of the pushrod, thus locking the shoe to the base. The camera/shoe is released from the base simply by fully depressing the fixing/releasing buttons while lifting the camera from the base.

### DETAILED DESCRIPTION OF PREFERRED EMBODIMENT Y, et al.

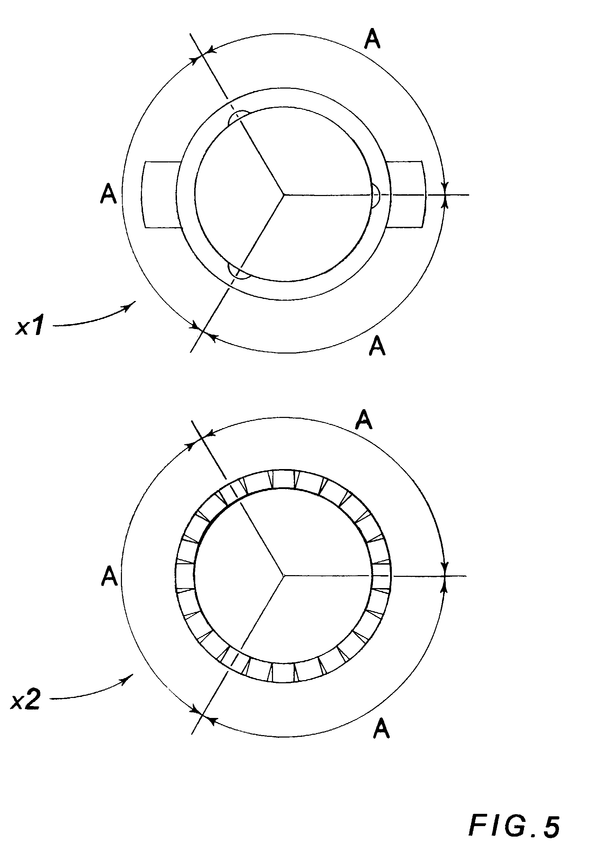

Referring now to FIGS. 5-16, preferred embodiment "Y", and other embodiments of the device according to the present invention will be described.

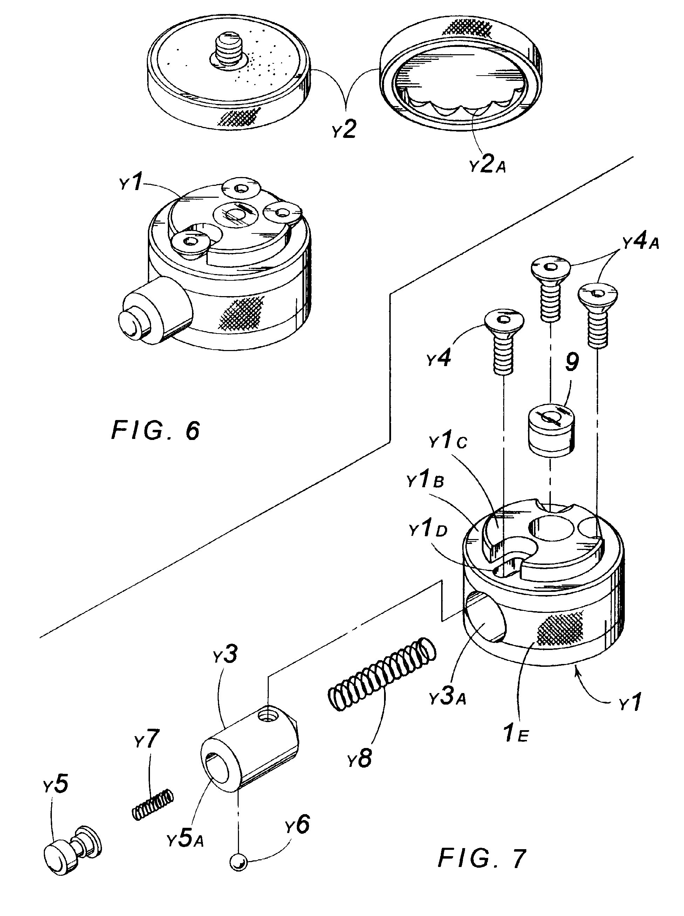

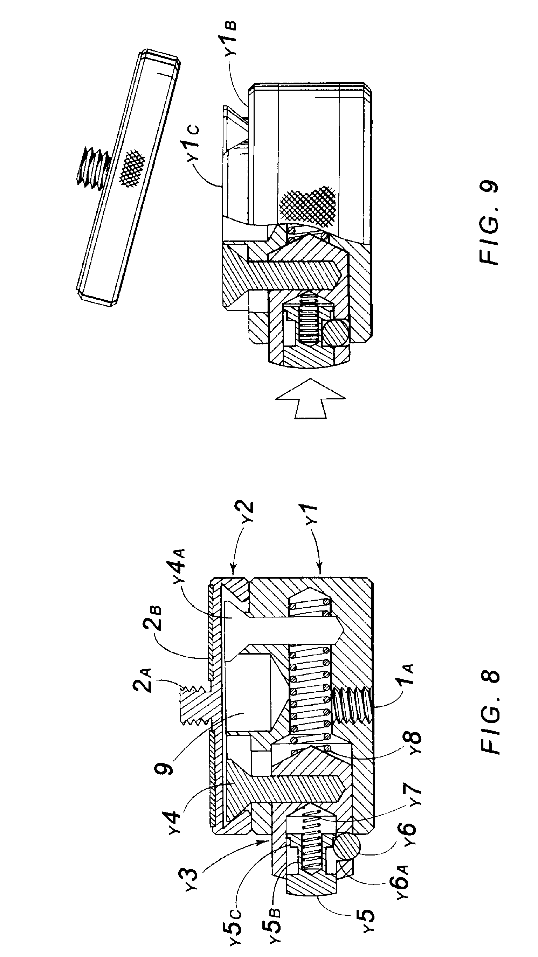

The device includes a base _{**Y**}**1** (see FIG. 6) at the lower end portion thereof. Base _{**Y**}**1** is mounted to the panhead base **21** (see FIG. 14) of a conventional tripod panhead **22**. A threaded socket **1**_{**A**} (see FIG. 8) is formed in the central bottom portion of base _{**Y**}**1**, which is adapted to mate with a standard camera mounting screw **2l**_{**A**} (see FIG. 14), which protrudes from the panhead base **21** of a conventional tripod panhead **22**. At the upper end portion of the present invention, a shoe _{**Y**}**2** (see FIG. 6) is provided which includes on its upper middle portion, a protruding screw thread **2**_{**A**} (see FIG. 8) which is adapted to mate with the standard tripod screwhole **20**_{**A**} (see FIG. 14) found in the underside of most cameras and optical equipment.

Base _{**Y**}**1** (see FIG. 7) comprises a cylindrical body on the upper surface of which is formed a flat area _{**Y**}**1**_{**B**}, and a circular boss _{**Y**}**1**_{**C**}. Two hardened-metal countersunk retaining screws _{**Y**}**4**_{**A**} are fastened to the body 60 degrees apart, and at an appropriate distance from the center of the body. A slot _{**Y**}**1**_{**D**} is formed in the upper surface of the body, directly opposite screws _{**Y**}**4**_{**A**}, and in which a hardened-metal countersunk retaining screw _{**Y**}**4** can move between a locked and a released position. A spirit level **9** is mounted into the top of the body in the space between the retaining screws _{**Y**}**4**_{**A**} and the slot. A blind, stepped bore _{**Y**}**3**_{**A**} is formed in the side of the body and in line with the slot _{**Y**}**1**_{**D**}, and in which a fixing/releasing button _{**Y**}**3** is slidably mounted. Retaining screw _{**Y**}**4** is fixedly attached to the fixing/releasing button through the slot _{**Y**}**1**_{**D**}. The fixing/releasing button _{**Y**}**3**, and thus the retaining screw _{**Y**}**4**, is held in the fixed position (see FIG. 8) by the force of a main compression spring _{**Y**}**8**. The fixing/releasing button _{**Y**}**3** comprises in its front portion a locking button _{**Y**}**5**, a compression spring _{**Y**}**7**, and a locking ball _{**Y**}**6**. The locking button _{**Y**}**5** is slidably mounted in a blind bore _{**Y**}**5**_{**A**} (see FIG. 7) formed in the outer end of the fixing/releasing button _{**Y**}**3**. The locking button _{**Y**}**5** (see FIG. 8) has a circumferential groove _{**Y**}**5**_{**B**}, and a circumferential shoulder _{**Y**}**5**_{**C**} formed on its outer periphery, and a bore to accept a compression spring _{**Y**}**7**. Locking ball _{**Y**}**6** is slidably mounted in a throughbore _{**Y**}**6**_{**A**}, formed in the underside of the fixing/releasing button. The locking ball is retained in its bore on its upstroke by the locking button, and on its downstroke by a dimple formed around the bottom outer edge of the bore.

Shoe _{**Y**}**2** (see FIG. 6) is disc-shaped and constructed of a single piece of hardened metal. A circular recess is formed in the bottom surface of the shoe. Twelve equally-spaced concavities, the size and shape of which match a vertical section of the countersunk-head portion of base retaining screws _{**Y**}**4** & _{**Y**}**4**_{**A**}, are formed along a circumference of the interior wall of the recess. A resilient friction material **2**_{**B**} (see FIG. 8) is bonded to the upper surface of the shoe, which serves to protect the finish of the camera or other device to which it is mounted, and to prevent inadvertent slippage. A knurl **1**_{**E**} is formed around the outer periphery of the shoe to assist the installation on, and removal from the camera or other device.

### OPERATION OF THE INVENTION - EMBODIMENT Y, et al.

The operation of the coupling device constructed in this manner will now be described.

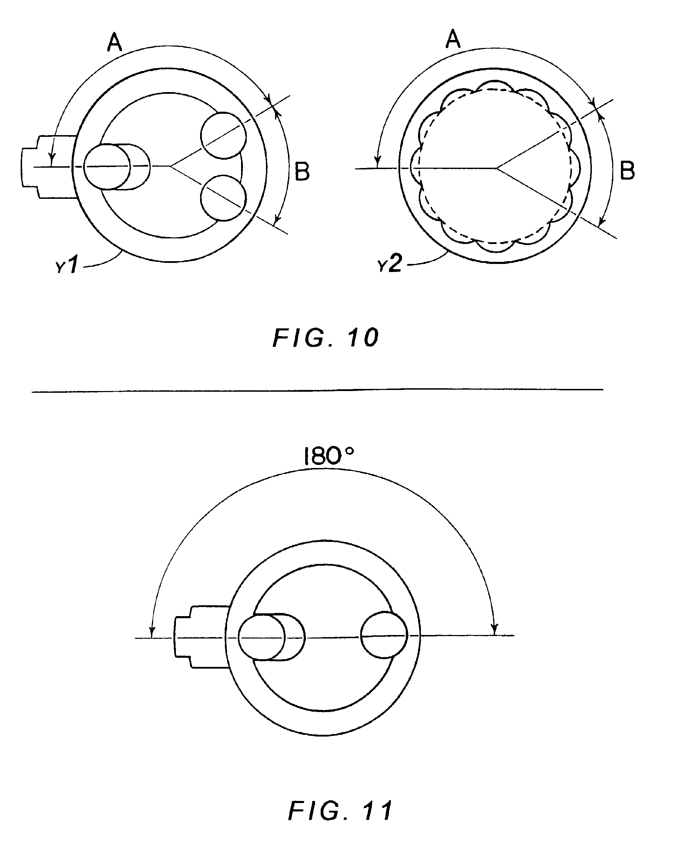

The coupling operation is as follows: the fixing/releasing button is fully depressed and held in the released position (see FIG. 9). A camera (not shown) with shoe attached is then lowered onto the base until the bottom of the shoe is approximately resting on the flat surface _{**Y**}**l**_{**B**} (see FIG. 7 & FIG. 9) of the base. The circular boss _{**Y**}**1**_{**C**} of the base fits freely into the recess of the shoe and serves to roughly center the shoe on the base and thus prevent the engagement of the base retaining screws with inappropriate concavities in the shoe. The fixing/releasing button is then fully released (see FIG. 8) and, if necessary, the camera/shoe is rotated slightly in order to enable the retaining screws _{**Y**}**4** & _{**Y**}**4**_{**A**} to engage the appropriate concavities in the shoe. Since the angular displacement A & B (see FIG. 10) of the three retaining screws on the base match exactly the angular displacement of appropriate concavities in the shoe, and since the twelve concavities in the shoe are regularly spaced, and thus 30 degrees apart, the camera/shoe will need to be rotated with respect to the base, not more than 15 degrees in either direction to achieve positive engagement. The camera/shoe is released from the base (see FIG. 9) simply by fully depressing the fixing/releasing button while slightly twisting and lifting the camera from the base.

The automatic locking feature operates as follows: if locking button _{**Y**}**5** (see FIG. 8) is manually depressed against the force of compression spring _{**Y**}**7**, locking button is free to slide in bore of fixing/releasing button _{**Y**}**3**, to a position where groove _{**Y**}**5**_{**B**} is lined up with bore _{**Y**}**6**_{**A**}. If the locking button is further depressed, the locking ball _{**Y**}**6** is displaced into the groove _{**Y**}**5**_{**B**} (see FIG. 9), and the entire fixing/releasing button assembly is free to slide inward into the body _{**Y**}**1**, against the force of the main compression spring _{**Y**}**8**. The locking retaining screw _{**Y**}**4** is thus moved to the released position and the shoe may be separated from the base. If, on the other hand, manual pressure is released from the fixing/releasing button (see FIG. 8), the entire fixing/releasing button assembly, including the retaining screw _{**Y**}**4**, is moved outward by the force of the main compression spring _{**Y**}**8**. When the fixing/releasing button has reached the end of its travel, a further release of manual pressure results in the locking button _{**Y**}**5** sliding outward in its bore in the fixing/releasing button, by the force of the compression spring _{**Y**}**7**. As the locking button slides outward, the locking ball _{**Y**}**6** is forced downward in its bore by the shoulder _{**Y**}**5**_{**C**} of the locking button. The locking ball thus now protrudes from the lower surface of the fixing/releasing button, effectively blocking any unintended movement of the fixing/releasing button - retaining screw assembly toward the released position. (see FIG. 8)

These particular embodiments of the invention have the advantage of enabling a photographer, simply by leveling the base by means of the built-in spirit level, and using the standard 50mm lens found on most SLR cameras, to photograph a composite panorama by sequentially engaging concavities of the camera shoe. This is possible because the spacing of the concavities of the shoe of embodiment "Y" is 30 degrees, which is slightly less than the field of view of the standard 50mm lens. A desirable overlap between successive frames, which may be subsequently trimmed, is thus achieved. Embodiment "X" has a shoe concavity spacing of 15 degrees, which means that every other concavity is engaged to achieve an interval appropriate for a 50mm lens, or if a lens of longer focal length is used, then consecutive concavities may be engaged. The embodiment "Y" also has the added advantage of rebuildability - should the contact areas of the base retaining screws wear out or become damaged, they can be easily and inexpensively replaced.

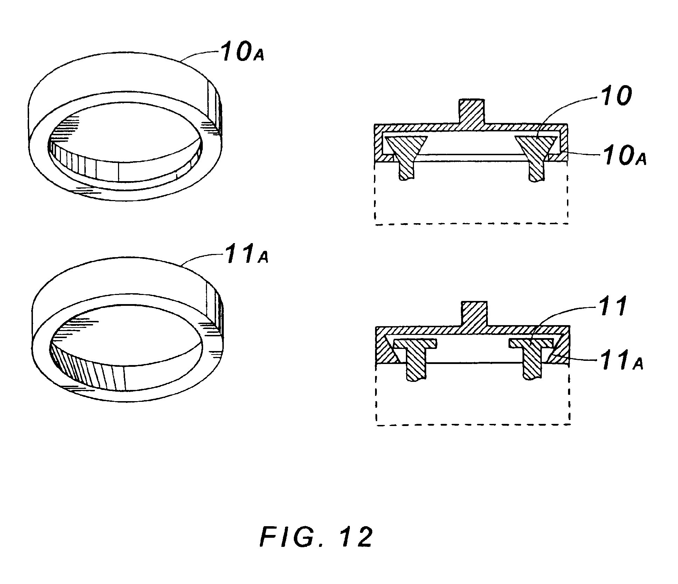

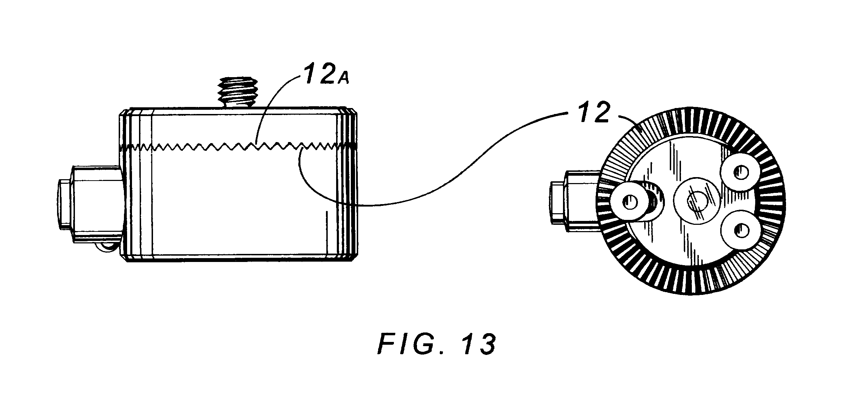

Other embodiments and modifications of the device according to the present invention are anticipated. FIG. 12 shows two alternative arrangements, on embodiment "Y", of the shoe-to-base retaining means engaging surfaces. Number **10**_{**A**} shows a shoe with an L-sectioned interior wall engaging with a base retaining means **10**, which is formed in an incline. Number **11**_{**A**} shows a shoe with an incline-sectioned interior wall which incline engages with an inverted L-sectioned protrusion **11** on the base. The coupling shoes can have their interior walls formed with or without discrete concavities; in the case of a shoe having no concavities formed in its interior wall, rotational slippage between the shoe and the base can otherwise be arrested by radial serrations or the like, formed on the bottom of the shoe, which are adapted to mesh with similar serrations formed on the base (see area denoted by **12** & **12**_{**A**} in FIG. 13). The degree intervals of the serrations are ideally dimensioned so that the panorama indexing feature is retained, and the sides of the base and shoe appropriately marked for reference to aid such indexing.

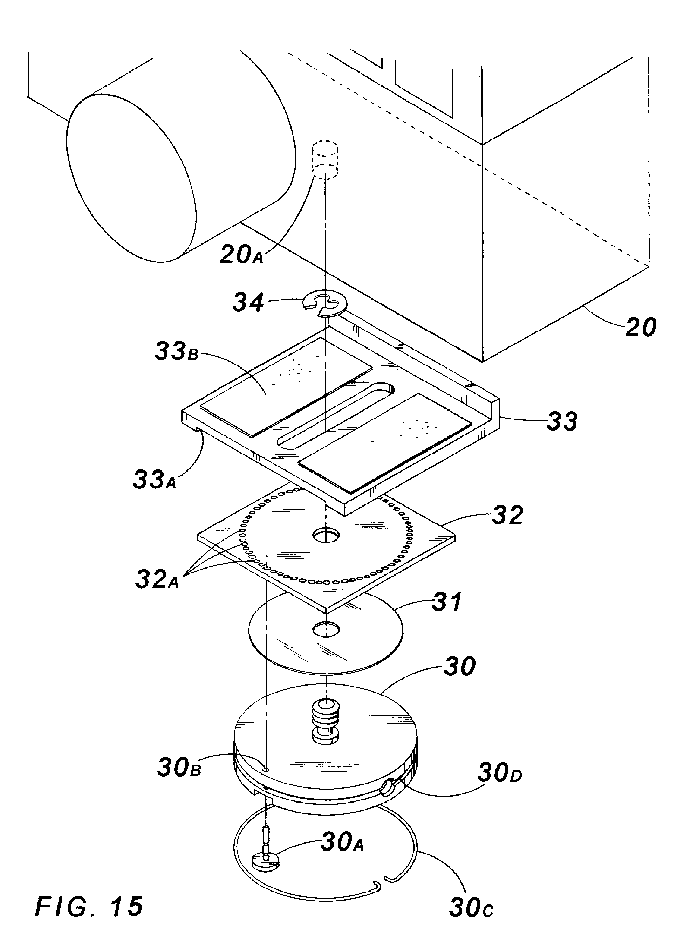

The device according to the present invention with some modifications which enable the shoe-to-camera and the base-to-panhead connections to be more permanent and secure is shown in FIGS. 14 & 15.

FIG. 14 shows the device according to the present invention featuring anti-twist methods well known in the prior art. Number **13** shows the coupling shoe with a groove machined into its top surface in which a metal plate **13**_{**B**} may slide. A hole is formed in the middle of the shoe which is adapted to fit a camera screw **13**_{**A**}. Anti-twist plate **13**_{**B**} has a longitudinal slot formed in its middle, which is adapted to accept screw **13**_{**A**}, and one upturned edge. Base has threaded holes **14**_{**A**}, which pass through the body, and into which fit setscrews **14**. The modifications operate as follows: plate **13**_{**B**} is placed in the groove of shoe **13**; camera screw **13**_{**A**} is passed through the shoe and the slot in the plate, and then loosely threaded into the standard camera screw socket **20**_{**A**} in the underside of camera **20**; plate **13**_{**B**} is then adjusted so that its upturned edge firmly abuts against an appropriate vertical edge of the camera; the camera screw **13**_{**A**} is then firmly tightened. The upturned edge of plate **13**_{**B**}, when thus held firmly against an edge of the camera and within the groove of the shoe **13**, prevents the inadvertent loosening of the shoe from the camera. The base is secured to the panhead by rotating the entire base onto the standard camera screw **2l**_{**A**} until it is tight against panhead base **21**. Setscrews **14** are then simply tightened against panhead base **21**, assuring a secure, slip-proof connection.

FIG. 15 shows the device according to the present invention featuring, on its shoe, a novel anti-twist means allowing for the use of a one-piece camera screw/shoe. It is composed of an anti-twist plate with a vertical component adapted to engage a vertical component of a camera or other optical device when shoe is mounted to camera, and a camera screw slot; a pin register plate having a camera screw hole and a series of pin register holes radially arranged about the camera screw hole, and a means to engage the anti-twist plate in such a manner allowing sliding movement along an axis of elongation of slot on anti-twist plate, while arresting rotational movement relative to said anti-twist plate; a shoe with integrated camera screw, and a retractable pin emerging from the shoe adapted to enter an appropriate hole of the pin register plate, thus mechanically blocking twisting relative to said pin register plate when shoe is mounted to camera. This anti-twist feature can be incorporated in all of the disclosed embodiments of the device according to the present invention, as well as in many devices of the prior art.

Number **33** (see FIG. 15) shows an anti-twist plate similar to the plate shown in number **13**_{**B**}, except that it features a groove **33**_{**A**} in its underside to slidably accept a pin register plate **32**. Pin register plate **32** is a thin metal plate with straight edges dimensioned to slidably fit in groove **33**_{**A**}, a bore in its middle through which the camera screw portion of anti-twist shoe **30** may pass, and a series of closely-spaced pin register holes **32**, arranged radially about the middle bore. A circular low-friction washer **31** has a camera screw hole in its middle, and an outside diameter dimensioned smaller than a diameter described by the inner edges of the pin register holes **32**_{**A**} of the pin register plate **32**. An anti-twist shoe **30**, is a shoe of the device of the present invention with the additional features: a locking pin **30**_{**A**} is fashioned of hardened metal and features a flat head, and a shaft extending upward from the head. Two circumferential grooves, dimensioned to engage a detent spring **30**_{**C**}, are formed on the shaft. The flat head is dimensioned to be sufficient for fingernail manipulation. Anti-twist shoe has a locking pin bore axially drilled near its outer circumference, on a radius identical to that of the pin register bores **32**_{**A**} of the pin register plate **32**. A circumferential detent spring groove **30**_{**D**}, is formed along the outer diameter of the shoe, and is dimensioned to freely accept a locking pin detent spring **30**_{**C**}. A spring retaining clip **34** is furnished which clips around a lower unthreaded area of the camera screw portion of the anti-twist shoe, so that the components of the assembly remain in operative engagement when not mounted on the optical device, thus enhancing ease of use.

The operation of the novel anti-twist feature of the device according to the present invention is as follows: the locking pin **30**_{**A**} of the anti-twist shoe (see FIG. 15) is pulled downward in its bore **30**_{**B**} by applying fingernail pressure on its flat area, until its upper circumferential groove engages the locking pin detent spring **30**_{**C**}; the anti-twist shoe assembly is partially threaded into the socket **20**_{**A**} of the camera or other optical device; anti-twist plate **33** is then slid along the camera screw slot until its upturned edge abuts against a bottom edge of the camera or other optical device; the anti-twist shoe is then further threaded into the camera socket **20**_{**A**} until it is tight against the camera body or other optical device; locking pin **30**_{**A**} is pushed upward in its bore **30**_{**B**} until it either slides directly into a pin register bore **32**_{**A**} of pin register plate **32**, or it stops in an area between pin register bores. Should the locking pin encounter an unbored area, the shoe is simply either tightened further or loosened slightly while simultaneously applying upward pressure on locking pin, until pin enters a pin register hole. The locking pin is retained in its upward position by the engagement of the lower circumferential groove on its shaft with the locking pin detent spring **30**_{**C**}. To remove the assembly from the camera or other optical device, one retracts locking pin by applying downward fingernail pressure on its flat area until it clicks on its upper detent groove. The assembly may then be simply unscrewed from the camera or other optical device.

The anti-twist feature just described eliminates the necessity of using a separate camera screw when an anti-twist system is desired for the shoe portion of camera-to-tripod couplings such as the device according to the present invention, as well as many devices of the prior art, greatly increasing the convenience of a coupling incorporating an anti-twist system.

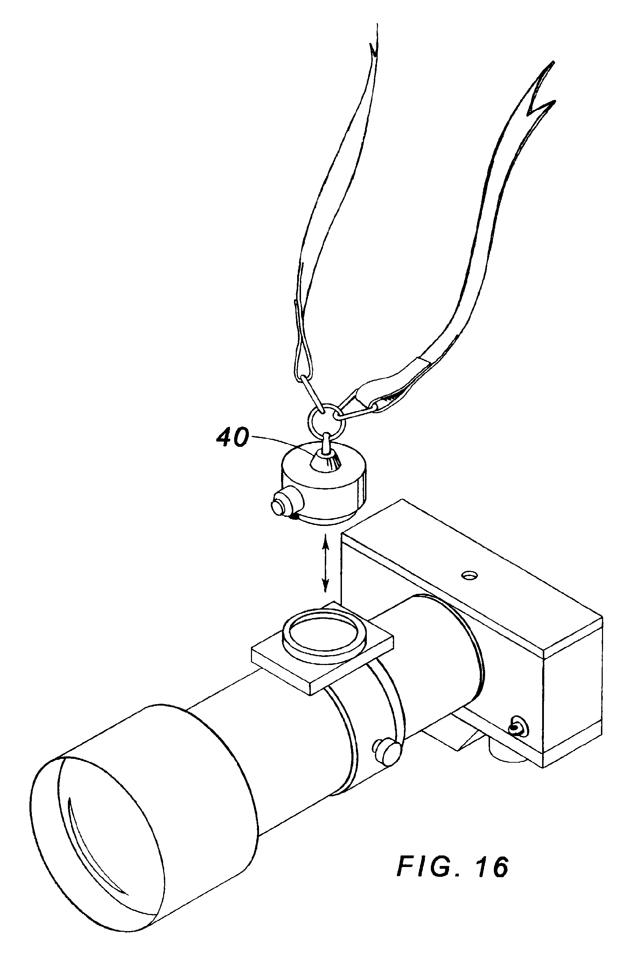

Although the coupling device of the present invention is intended mainly as a means to quickly attach a camera or other optical device to a supporting device such as a tripod, its size, shape, and operational simplicity make it also ideal as a means to quickly attach and remove a camera from its strap. FIG. 16 shows embodiment "Y" of the device according to the present invention attached to a camera strap in an upside-down orientation, via a (preferably) swiveling screw **40** which is knurled and manually threaded into the panhead screw attachment socket **1**_{**A**} in the base of the device according to the present invention. It is especially advantageous to strap-carry heavy and long telephoto mounted cameras in the manner shown, as such lenses are usually provided with a tripod attachment collar near the balance point of the lens - a long telephoto lens can then be carried horizontally rather than dangling vertically and vulnerable. Straps emerging from the base of the camera or lens are also much less likely to interfere with the operation of camera controls than straps attached to the camera body itself. And the quick-mount base and strap, without the camera attached, can be comfortably worn as its size and shape rather resembles a pendant. In comparison, a camera strap attached to quick-mount devices of the prior art would be too unattractive and bulky to be worn comfortably as a "pendant" without a camera attached.

### CONCLUSION, RAMIFICATIONS, AND SCOPE

It will be apparent that the device of the invention thus described represents a significant improvement over devices of the prior art. Its unique design offers a number of advantages over presently available couplings:
- the multiple mounting positions the device allows for, permits a photographer to quickly attach a camera to a support device without visual confirmation, i.e., by feel alone so as not to divert attention from the subject. The round form of both the shoe and the base aids the rapid joining of the members because the similarity of feel encourages non-visual, tactile orientation;
- the device is very compact and unobtrusive: the shoe can also be attached to compact "point-and-shoot"cameras; and unused shoes, which may be no larger than a coin, can also be stored in a wallet, or a pocket - hardly practical with the shoe portion of devices of the prior art;
- the shoe and the base, the retaining means of the base, the fixing/releasing button(s), in fact all the exposed components of the device are rounded, presenting no sharp edges to snag clothing and equipment bags, etc. In addition, the shoe features internal engagement areas, which cannot snag and are invulnerable to damage and fouling;
- provides for automatic, mechanical locking of the shoe to the base simply by releasing the fixing/releasing button(s);
- both shoe and the base can be quickly removed from the camera and the support device respectively, without tools. This allows for the quick attachment of accessories such as a flash bracket or motor drive, etc.;
- provides a means for facilitating composite panoramic photography, or for other applications requiring the sequential, positive, discrete, and repeatable radial aiming of an optical device with respect to its supporting device
- provides a novel anti-twist feature which enables the use of a convenient one-piece camera screw/shoe;
- The compact, round, and attractive shape of the base, and its straightforward and intuitive operation lends itself particularly well for use as a method to rapidly disconnect a camera strap from a camera - invaluable as a means to avoid the image degradation of tripod exposures associated with camera strap flutter in windy conditions, as well as a convenient means to temporarily eliminate an often cumbersome strap and thus gain freedom of movement and ease of operation. A strap attached to the tripod collar of long lenses also improves balance in carrying.

In addition to offering the above advantages to the conventional quick-release, the indexing capability of the device of the present invention opens up other possibilities for the uses of a quick-release. For example, if the shoe of the present invention is mounted, via a 90-degree bracket, to a camera such that it is oriented vertically with respect to the camera body, and so that its center is in line with the center of the lens, a multiple exposure kaleidoscopic-effect photograph can be taken by means familiar to those skilled in the field.

The device of the present invention has been described in detail with respect to optical instruments such as cameras, but the device can also be applied for supporting a variety of apparatus which must be coupled and uncoupled and/or rotationally indexed to a base with rapidity and security. As will be understood by those familiar with the art, the device according to the present invention may be embodied in other specific forms without departing from its spirit or essential characteristics. For example, the "protrusions" of the base fixing/releasing means need not be the screws or balls as illustrated, but may be pins, or any of a range of protrusions cast or otherwise formed into the base which would serve a similar function of the components shown here. Accordingly, the disclosure of the preferred embodiments of the present invention is intended to be illustrative, but not limiting, of the scope of the invention which is set forth in the following claims and their legal equivalents.

## Claims

1. In a coupling of the type suitable for the rapid mounting and removal of optical instruments such as still and video cameras, to and from supporting devices such as tripods; said coupling comprising a shoe attachable to said optical instrument, a base attachable to said supporting device, and a fixing/releasing means movable between a fixed position and a released position for releasably fixing said shoe to said base, characterized in that:
said shoe comprises, on a lower surface thereof, a substantially circular recess defining an interior wall, and a substantially circular aperture defining a lower edge of said interior wall;
inwardly-formed retaining means extending along a circumference of said interior wall, the retaining means having first engaging surfaces;
said base including on an upper end thereof, a fixing/releasing means comprising a plurality of lateral protrusions, having second engaging surfaces adapted to engage outwardly against said first engaging surfaces of said retaining means of said shoe when said fixing/releasing means is in said fixed position, and at least one of said lateral protrusions is laterally movable between an outwardly fixed and an inwardly released position.

2. The improvement of claim 1, wherein said retaining means of said shoe comprises a plurality of equally spaced concavities;
the angular spacing between the concavities define a discrete shoe-to-base rotational orientation so that, through the selective engagement of said lateral protrusions of said base with said concavities, or combination of said concavities, an optical instrument can be releasably fixed to said base in a series of discrete positions relative to said base, facilitating indexing suitable to sequential photography or imagery.

3. The improvement of claim 1, wherein said retaining means of said shoe comprises a continuous, inwardly-inclined interior wall.

4. The improvement of claim 1, wherein said retaining means of said shoe comprises an interior wall substantially L-shaped in section.

5. The improvement of claim 1, wherein said shoe includes on a bottom side thereof a first mating surface concentric with, and coplanar to, said circular aperture, and equally-spaced serrations formed radially on said mating surface;
said base includes, on an upper end thereof, a second mating surface, with equally-spaced serrations formed radially thereon, adapted to mesh with the serrations on said first mating surface of said shoe when said shoe is releasably fixed to said base, so that rotational movement of said shoe relative to said base is arrested.

6. The improvement of claim 5, wherein the intervals between said equally-spaced serrations are dimensioned to define a discrete shoe-to-base rotational orientation so that, through the selective engagement of said serrations, singly or in combination, an optical instrument can be releasably fixed in a series of consecutive, discrete positions relative to said base, facilitating indexing suitable to sequential photography or imagery.

7. The improvement of claim 1, wherein said laterally movable protrusion is moved outwardly by the urging force of a spring means, and is moved inwardly by an external force opposing said urging force of said spring means.

8. The improvement of claim 7, wherein a plurality of said first and said second engaging surfaces on said shoe retaining means and said lateral protrusions of said fixing/releasing means of said base are formed in an incline, so that said urging force of said spring means cooperates with said incline to snugly fix said shoe to said base when said fixing/releasing means is in said fixed position.

9. The improvement of claim 7, wherein said fixing/releasing means includes means for locking said laterally movable protrusion in the fixed position when said external force opposing said urging force of said spring means is released, and unlocking said laterally movable protrusion when said external force is applied.

10. In a coupling of the type suitable for the rapid mounting and removal of optical instruments such as still and video cameras, to and from supporting devices such as tripods; said coupling comprising a shoe attachable to said optical instrument, a base attachable to said supporting device, and a fixing/releasing means movable between a fixed position and a released position for releasably fixing said shoe to said base, characterized in that:
said shoe comprises an anti-twist means to mechanically block unintended movement of said shoe with respect to the camera when said shoe is mounted to said camera;
said anti-twist means comprises an anti-twist plate having an upper surface, an elongated orifice, and a vertical component emerging from said upper surface adapted to mechanically engage with a suitable vertical component of said camera so that rotational movement of said anti twist plate with respect to said camera is arrested;
a register plate having a central orifice, a plurality of register catches arranged radially about said central orifice, a means to engage said anti-twist plate to prevent rotational movement with respect to said anti-twist plate and allow linear movement along the axis of elongation of said elongated orifice of said anti-twist plate;
a shoe with an upper surface, and an integrated camera screw emerging from said upper surface, said camera screw being adapted to freely fit through said central orifice of said register plate and through said elongated orifice of said anti-twist plate, at least one vertical protrusion retractably emerging from said upper surface of said shoe at a predetermined radial distance from said camera screw, and adapted to engage with at least one of said register catches when said protrusion is extended from said upper surface of said shoe, so that rotational movement of said shoe with respect to said register plate is arrested.
